# EUROPEAN PATENT APPLICATION

(11) **EP 3 076 530 A1**
(43) Date of publication of application: **05.10.2016**
(21) Application number: 15161984.8
(22) Date of filing: 31.03.2015
(51) Int. Cl.: H02K 29/00, H02K 21/28

(54) **DC-MOTOR**

(71) Applicant: Cheng, Peng, 857 41 Sundsvall (SE); Oelmann, Bengt, 857 30 Sundsvall (SE); Haller, Stefan, 857 33 Sundsvall (SE)
(72) Inventor: Cheng, Peng, 857 41 Sundsvall (SE); Oelmann, Bengt, 857 30 Sundsvall (SE); Haller, Stefan, 857 33 Sundsvall (SE)
(74) Representative: Awapatent AB

(57) **Abstract**

A direct current motor comprising a stator, a rotor arranged within the stator, and a motor drive device (20) connected with the stator and with the rotor, wherein the stator comprises a yoke defining a cylindrical cavity, and a plurality of permanent magnets arranged at an inner surface of the stator, wherein the rotor comprises a cylindrical core and a conductor structure (27) arranged at the core, wherein the motor drive device comprises an alternating current transformer (21) having a primary winding (22) arranged at the stator and a secondary winding (23) arranged at the rotor, a rectifier device (24) arranged at the rotor and connected with the secondary winding, a direct current supply device (25) arranged at the rotor and connected with the rectifier device, and an electronic commutator (26) arranged at the rotor and connected with the direct current supply device and with the conductor structure.

## Description

### FIELD OF THE INVENTION

The present invention relates to a brushless direct current (DC) motor.

### TECHNICAL BACKGROUND

The presently most popular motors used in various industries are squirrel-cage induction motors (SQIMs) and brushless permanent-magnet motors (BLPMMs), where the SQIM accounts for more than 90% of all industrial motors in use. The modern SQIM and BLPMM have similar stator designs where distributed copper windings around electrical steel laminates are used to create a rotating magnetic field. However, their rotor designs are different. The SQIM has a cylindrical rotor shaft with die-casted aluminum or copper squirrel-cage structure on electrical steel laminates. In contrast, the BLPMM has permanent magnets either mounted near the surface, forming a cylindrical rotor or buried inside the electrical steel laminates for a salient-pole rotor. While the BLPMMs typically achieve better efficiency and power density, SQIMs have dominated the industry for more than half a century due to their high reliability, decent efficiency and low production cost.

It is estimated that almost one third of the worldwide generated electrical energy is consumed by industrial motors. The electricity bill can account for up to 95% of the lifetime cost of owning and running these motors. Hence the efficiency of a motor is an obvious key parameter for the industry to optimize. When a variable-speed motor with a high operating efficiency is needed in industrial applications, usually an electrical system called variable-frequency drive (VFD) is used to power and control the connected motor. The basic architecture of a modern VFD's power electronics system includes three distinct stages. First the rectifier stage which is built with either passive power diodes, or active IGBTs for regenerative and power-factor-correction functions, and optional input filters. Second a DC link stage which is built with a high-voltage capacitor bank, line filtering chokes, a brake chopper and an optional brake resistor. Finally an inverter stage which is built with IGBTs and optional output filters. Over time, much effort has been taken to improve both the wiring techniques and electrical steel properties in order to improve the overall efficiency of the motor. A lot of efforts have also been taken to improve the performance and reduce the losses of the IGBTs, the high-voltage capacitors and the filters in the VFD in order to further increase the efficiency of the drive. However, the potential for efficiency improvement diminishes since these technologies have been matured. As the requirements on efficiency and performance increase for variable-speed motor applications, it is necessary to start looking beyond the existing.

### SUMMARY OF THE INVENTION

It would be advantageous to provide en electric motor which has an improved efficiency.

To better address this concern, in a first aspect of the present invention there is presented a DC motor comprising a stator, a rotor arranged within the stator, and a motor drive device connected with the stator and with the rotor. The stator comprises a yoke defining a cylindrical cavity, and a plurality of permanent magnets arranged at the yoke. The rotor comprises a core and a conductor structure arranged at the core. The motor drive device comprises an alternating current transformer, having a primary winding arranged at the stator and a secondary winding arranged at the rotor, a rectifier device arranged at the rotor and connected with the secondary winding, a direct current supply device arranged at the rotor and connected with the rectifier device, and an electronic commutator arranged at the rotor and connected with the direct current supply device and with the conductor structure. Due to a DC structure, and the on-rotor drive system of the DC motor, the efficiency compared to the above-mentioned prior art motors with AC drives is increased. More specifically, the overall efficiency improvement of the variable-speed motor in the invention come from the combination of the following advantageous points: Due to its true DC design, this motor can achieve a power factor approaching one and it avoids the skin effect and proximity effect associated with conventional AC motors, which minimize the resistive and magnetic losses and also reduce the need of capacitors in the drive. Unlike SQIMs, there is no magnetization power loss for creating the strong rotating magnetic field. Compared with SQIMs and BLPMMs, the magnetic loss of the present motor is considerably less, because the strong magnetic field from the permanent magnets arranged in the stator only induce losses at the rotor, which is substantially smaller in size than the stator.

In accordance with an embodiment of the DC motor, the motor drive device comprises an operation control device comprising a first unit arranged at the rotor and a second unit arranged externally of the rotor and wirelessly communicating with the first unit. Thereby, the problem of controlling of the operation directly at the rotor is conveniently solved.

In accordance with an embodiment of the DC motor, the conductor structure comprises a squirrel cage structure. This is an advantageous structure having low losses.

In accordance with an embodiment of the DC motor, the core of the rotor is provided with circumferentially separated pipes near its surface, each pipe containing a respective one of the conductors of the squirrel cage structure of conductors, each conductor comprising at least one turn of wire. This embodiment further supports the lowering of losses.

In accordance with an embodiment of the DC motor, the direct current supply device comprises a direct current transformer arranged to down-transform a direct current voltage received from the rectifier device. The direct current transformer comprises multiple synchronous buck converters with a bi-directional, parallel and multi-phase topology. Thereby, a low loss DC/DC conversion is obtained.

In accordance with an embodiment of the direct current motor, the rectifier device is a high current low voltage active rectifier based on semiconductor switches. In accordance with an embodiment of the direct current motor, the electronic commutator is a high current low voltage commutator based on semiconductor switches. Enabling the DC motor to be driven at low voltages and high currents provides further possibilities of improving the efficiency of the DC motor. These semiconductor switches can be paralleled together to further reduce the resistive power loss of the electronic commutator.

In accordance with an embodiment of the DC motor, the rectifier device, the direct current supply device, and the electronic commutator comprise at least one circular board mounted at a centre shaft of the rotor. Thereby, the basis for a compact and well-balanced structure is provided.

In accordance with an embodiment of the DC motor, the first unit of the operation control device comprises a circular board mounted at a centre shaft of the rotor.

In accordance with an embodiment of the DC motor, the rectifier device, the direct current supply device, the electronic commutator and the first unit of the operation control device are arranged on at least one circular board mounted at a centre shaft of the rotor.

In accordance with an embodiment of the DC motor, the rectifier device is an active rectifier which comprises active semiconductor switches with a parallel topology. An advantage of this embodiment is that the voltage drop across the switches and hence the power loss in the rectifier is reduced. Another advantage of this embodiment is that the active rectifier can be controlled to support both power-factor correction and also the bi-directional power flow that enables regenerative braking function to this DC motor.

In accordance with an embodiment of the DC motor, the direct current supply device comprises multiple synchronous buck converters with a bi-directional, parallel and multi-phase topology. An advantage of this embodiment is that the drive voltage and drive current can have less harmonics ripple contents and higher precision, so the variable speed control can be more precise, and the drive needs less filtering capacitors which reduces size and cost. Additionally, individual phases can be turned off during a situation of lower motor load in order to further increase the efficiency. The bi-directional topology also enables regenerative braking function to this DC motor.

In accordance with an embodiment of the DC motor, an on-rotor drive system comprising the rectifier device, the DC supply device, and the electronic commutator, has an architecture which supports bi-directional power flow. Thereby, it can provide a regenerative braking function.

In accordance with an embodiment of the DC motor, the primary winding is configured to be connected with a three-phase power source, and the rectifier device is a full wave rectifier.

In accordance with an embodiment of the DC motor, the permanent magnets are elongated, extend between the ends of the stator cavity, and are grouped in at least two groups, each constituting a pole, and wherein the permanent magnets within each group are arranged adjacent to each other.

In accordance with an embodiment of the DC motor, each group contain magnets of different grades, where at least one magnet at the middle of the group has the highest grade. Thereby, the air gap magnetic flux density becomes more homogeneous across the groups.

In accordance with an embodiment of the DC motor, the permanent magnets are chosen from a group comprising of Neodymium-Iron-Boron (NdFeB), Samarium-Cobalt (SmCo), and Aluminum-Nickel-Cobalt (AlNiCo) magnets. It is advantageous to use strong permanent magnets in accordance with this embodiment.

In accordance with an embodiment of the DC motor, the magnets are arranged at an inner surface of the yoke.

### BRIEF DESCRIPTION OF THE DRAWINGS

The invention will now be described in more detail and with reference to the appended drawings in which:
Fig. 1 is a schematic cross-sectional view of an embodiment of a DC motor according to the present invention;
Fig. 2 is a block diagram of an embodiment of a motor drive device according to the present invention;
Fig. 3 is a schematic perspective view of an embodiment of the motor drive device as mounted on the DC motor, according to the present invention.

### DESCRIPTION OF EMBODIMENTS

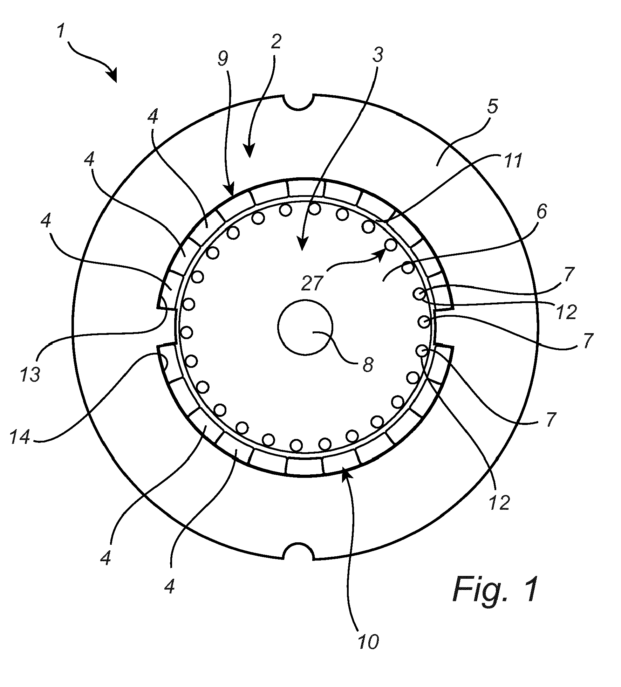

In accordance with a first embodiment the DC motor 1 comprises a stator 2, and a rotor 3 arranged within the stator 2. The stator 2 comprises a yoke 5 defining a cylindrical cavity 11, and a plurality of permanent magnets 4 arranged at an inner surface of the yoke 5. Although understood by the person skilled in the art, it should be noted that the expression "at an inner surface" does include both the case that the permanent magnets 4 are aligned with, and thus define, the inner surface, or at least a major part thereof, as shown in Fig. 1, and the case where they are embedded in the stator yoke 5, but arranged relatively close to the inner surface thereof. The rotor 3 comprises a cylindrical core 6 and a conductor structure 27 arranged at the core 6.

In this embodiment the conductor structure 27 is a squirrel cage structure and comprises twenty-six conductors 7 arranged close to the surface of the rotor 3 and extending equidistantly along the length of the rotor 3, and preferably slightly obliquely to a centre shaft 8 thereof. Each conductor 7 consists of one or more turns of wire. The core 6 comprises a plurality of circular sheets of metal, typically steel sheets, arranged on the centre shaft 8 and stacked together. Borings of the metal sheets provide pipes 12 through the core 6, where each pipe 12 contains a respective one of the conductors 7 of the squirrel cage structure of conductors. However, as an alternative to the pipes 12, obliquely extending grooves at the surface of the rotor 3 can be provided, where the conductors 7 are received in the grooves.

Furthermore, the yoke 5 of the stator 2 is built from ring shaped steel sheets, which have been stacked together. In this embodiment the DC motor 1 is a two-pole motor. At the inner surface of the yoke 5 two recesses 13, 14 have been formed, each containing one of the permanent magnetic poles 9, 10. More particularly, each recess 13, 14 extends along the length of the stator 2, and thus of the yoke 5, and covers almost half the peripheral of the inner surface. A set of permanent magnets 4 has been mounted in each recess 13, 14. Each set contains eleven bar shaped Neodymium Iron Boron (NdFeB) magnets 4 arranged side by side. Thus, in a cross-section of the stator 2, the sets of magnets are arc-shaped. Four different grades of NdFeB magnets were used to obtain a more homogeneous flux distribution in the air gap of each pole 9, 10, across the arc of the magnetic pole. Five centre magnets 4 have the highest grade and the grade decreases away from the centre towards the sides of the poles 9, 10.

As an alternative, at the moment less preferred, the magnets are arranged separated from each other.

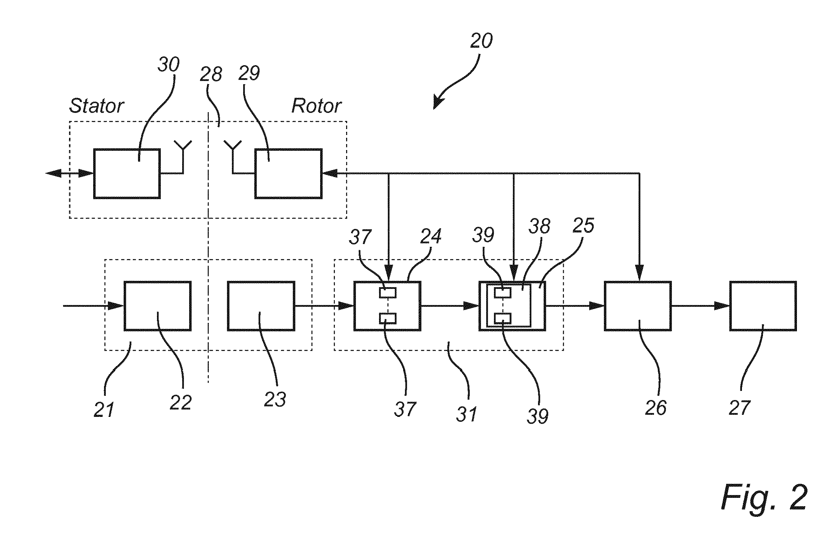

The DC motor further comprises a motor drive device 20, which is connected with the stator 2 and the rotor 3. A block diagram of the motor drive device 20 is shown in Fig. 2, where it is indicated with a dash-dotted line which parts are arranged at the stator 2 and at the rotor 3, respectively. The motor drive device 20 comprises an alternating current (AC) transformer 21, having a primary winding 22 arranged at the stator 2 and a secondary winding 23 arranged at the rotor 3, a rectifier device 24 arranged at the rotor 3 and connected with the secondary winding 23, a DC supply device 25 arranged at the rotor 3 and connected with the rectifier device 24, and an electronic commutator 26 arranged at the rotor 3 and connected with the DC supply device 25 and with the conductor structure 27. Further the motor drive device 20 comprises an operation control device 28 comprising a first unit 29 arranged at the rotor 3 and a second unit 30 arranged externally of the rotor 3 and wirelessly communicating with the first unit 29. Here, the second unit 30 is arranged at the stator 2. For instance, the wireless communication can be performed either with RF, or optically, or inductively.

By means of the divided AC transformer 21, power supply for the other on-rotor parts 24, 25, 26, 29 of the motor drive device 20, and for the conductor structure (windings) 27 of the very rotor 3, can be supplied via fixed wires from the secondary winding 23 and on. Additionally, the power is supplied in a brush-less manner. Below, the rectifier device 24, the DC supply device 25, and the electronic commutator 26, in common, will also be referred to as the on-rotor drive system. The AC transformer 21 is a step-down rotary transformer, which transforms three-phase AC power fed to the DC motor 1 to a lower voltage and a higher current, and the, thus, down-transformed AC voltage is then rectified by the rectifier device 24. As an alternative, one-phase AC power is used. The rectifier device 24 is an active rectifier stage based on semiconductors switches 37, such as MOSFET. The DC supply device 25 is a DC/DC Switched Mode Power Supply stage, i.e. it comprises a direct current transformer 38, which in turn comprises multiple synchronous buck converters 39 with a parallel and multi-phase topology. Consequently, the DC supply device 25 generates an output having even lower DC voltage and higher DC current. The DC supply device 25 outputs suitable DC voltage and current amplitudes to the conductor structure 27 of the rotor 3 in order to drive the motor 1 at a controlled speed and torque. However, the drive voltage is delivered through the electronic commutator 26, which comprises high current semiconductor switches 35 directly connected to the conductors 7. According to one embodiment the semiconductor switches 35 are MOSFETs. The conductor structure 27 is also called rotor armature winding, and the twenty-six conductors 7 shown in the cross-sectional view in Fig. 1 constitute thirteen independent single turn windings. The conductors 7 are insulated copper wires. The electronic commutator 26 comprises Hall-effect switches (not shown), which track the orientation of the magnetic field of the stator 2, and thereby realizes the commutation function.

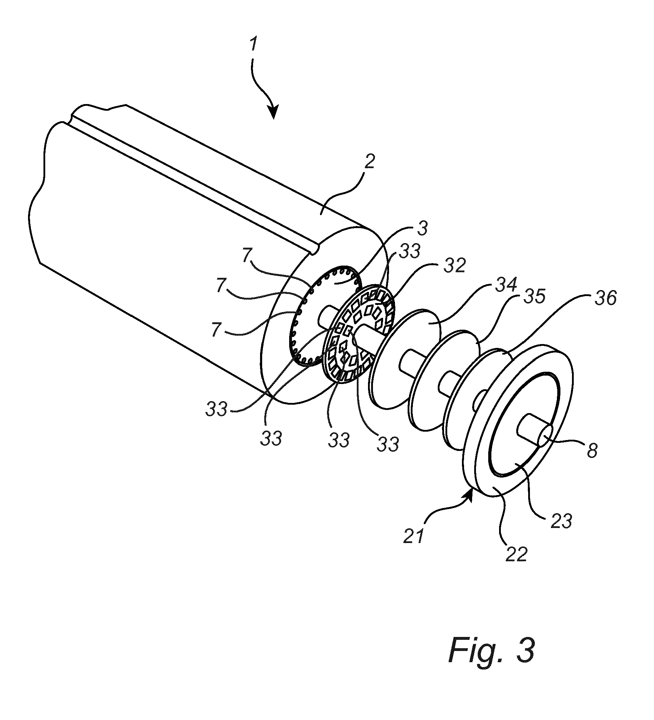

In order to obtain a well-balanced and compact commutator structure, the electronic commutator 26 comprises, and here is fully provided as, a circular board 32, typically a printed circuit board, mounted at the centre shaft 8 of the rotor 3, close to one end of the core 6 thereof, as most schematically illustrated in Fig. 3. However, for clarity reasons the parts in Fig. 3 are shown clearly separated from each other. The board 32 comprises thirteen pairs of semiconductor switches 33, which are distributed around the board 32, and which are connected with the conductors 7. The rectifier device 24 and the DC supply device 25 are manufactured as circular boards as well, a DC supply board 34, and a rectifier board 35, are mounted at the centre shaft 8 with the DC supply board 34 adjacent to the electronic commentator 32, and the rectifier board 35 adjacent to the DC supply board 34. A circular operational control board 36, implementing the first unit 29 of the operational control device 28, is mounted adjacent to the rectifier board 35, and connected to the other boards 32, 34, 35. Thus, the operational control board 36 is arranged between the rectifier board and the rotor mounted part, i.e. the second winding, 23 of the AC transformer 21. The shape of the circuit boards can be different, e.g. any symmetric shape will be feasible, such as a polygonal shape. In another embodiment the AC transformer and the rectifier device are fully integrated as a single transforming and rectifying device, but can still be functionally regarded as two separate devices as defined in the claims. Other combinations are feasible as well, such as combining the DC supply device 25 with the rectifier device 24 to a common DC power generation device 31, which could be arranged as a separate board, or even integrated with the secondary winding 23 of the AC transformer 21 into a common circular package, or even integrating the first unit 29 of the operational control device 28 into the other boards 32, 34, 35.

The on-rotor drive system 24, 25, 26, can thus be made highly integrated with the rotor armature. Thereby it can drastically reduce the drive current loop path distance and hence further reduce the resistive losses of this motor. Furthermore, a major part of the electronic components used for the on-rotor drive system 24, 25, 26 can be mass-volume low-cost commercial off-the-shelf miniaturized components from general electronics industry, since today there are competent enough components among them. The low-voltage high-current on-rotor drive system built with such components has a bi-directional, parallel and scalable architecture and it takes the advantage of the low-voltage DC multiphase drive topology with high operating frequency to drastically increase the power density, minimize the output harmonics and enable partial shut-down and regenerative braking capabilities, all of which contribute to the improvement of the drive efficiency and performance throughout the motor operating speed and torque ranges. The step-down rotary transformer which deliver utility AC power brushless from stator to rotor can be designed with state-of-the-art electrical steel to also reach high efficiency and it can be produced by the standard production methods of industrial transformers.

In order to exemplify the operation of the DC motor 1, experimental results have been obtained for a prototype 3000 rpm, 1.1 kW DC motor, and used to estimate full operation conditions to a back EMF of 1.85V and a current of 610A. The current can be distributed between up to five parallel armature windings, i.e. 122A per winding. For a 4.4kW motor the back EMF is estimated to 3.7V at a current of 1220A, and for a 211.2 kW motor the back EMF is estimated to 25.6V, at a current of 8452A.

The operation control device 28 receives in real time the motor control parameters such as start/stop, direction, speed and torque settings. This information is wirelessly transmitted from the second unit 30 externally of the rotor 3 to the first unit 29 on the rotor 3. The operation control device 28 converts these parameters into detailed control commands such as the drive voltage and drive current. This conversion process utilizes key parameters of the motor model stored in the operation control device 28, such as speed constant and torque constant. The control commands are then used to adjust the rectifier device 24, the direct current supply device 25 and the electronic commutator 26 accordingly, with important parameters such as switching sequence, switching frequency and duty cycle, on/off control of individual phases. The operation control device 28 also receives important data in real time from the rectifier device 24, the direct current supply device 25 and the electronic commutator 26, such as input voltage and current, drive voltage, individual phase current, rotor rpm, back EMF, operating temperature, diagnostic data, and so on. This data is used by the operation control device 28 to monitor the condition and the health of the motor, and if needed, they can also be forwarded wirelessly from the first unit 29 on the rotor 3 back to the second unit 30 externally of the rotor.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A direct current motor comprising a stator (2), a rotor (3) arranged within the stator, and a motor drive device (20) connected with the stator and with the rotor, wherein the stator comprises a yoke (5) defining a cylindrical cavity (11), and a plurality of permanent magnets (4) arranged at the yoke, wherein the rotor comprises a cylindrical core (6) and a conductor structure (27) arranged at the core, wherein the motor drive device comprises an alternating current transformer (21) having a primary winding (22) arranged at the stator and a secondary winding (23) arranged at the rotor, a rectifier device (24) arranged at the rotor and connected with the secondary winding, a direct current supply device (25) arranged at the rotor and connected with the rectifier device, and an electronic commutator (26) arranged at the rotor and connected with the direct current supply device and with the conductor structure.

2. The direct current motor according to claim 1, wherein the motor drive device (20) comprises an operation control device (28) comprising a first unit (29) arranged at the rotor (3) and a second unit (30) arranged externally of the rotor and wirelessly communicating with the first unit.

3. The direct current motor according to claim 1 or 2, wherein the conductor structure (27) comprises a squirrel cage structure.

4. The direct current motor according to any one of the preceding claims, wherein the core (6) of the rotor (3) is provided with circumferentially separated pipes (12) near its surface, each pipe containing a respective one of the conductors (7) of the squirrel cage structure of conductors (27), each conductor comprising at least one turn of wire.

5. The direct current motor according to any one of the preceding claims, wherein the direct current supply device (25) comprises a direct current transformer (38) arranged to down-transform a direct current voltage received from the rectifier device (24), which direct current transformer comprises multiple synchronous buck converters (39) with a bi-directional, parallel and multi-phase topology.

6. The direct current motor according to any one of the preceding claims, wherein the rectifier device (24) is a high current low voltage active rectifier based on semiconductor switches (37).

7. The direct current motor according to any one of the preceding claims, wherein the electronic commutator (26) is a high current low voltage commutator based on semiconductor switches (33).

8. The direct current motor according to any one of the previous claims, wherein the rectifier device (24), the direct current supply device (25) and the electronic commutator (26) comprise at least one circular board (32, 34, 35, 36) mounted at a centre shaft (8) of the rotor (3).

9. The direct current motor according to claim 2, wherein the rectifier device (24), the direct current supply device (25), the electronic commutator (26) and the first unit (29) of the operation control device (28) are arranged on at least one circular board (32, 34, 35, 36) mounted at a centre shaft (8) of the rotor (3).

10. The direct current motor according to any one of the preceding claims, wherein the primary winding (22) is configured to be connected with a three-phase power source, and wherein the rectifier device (24) is a full wave rectifier.

11. The direct current motor according to any one of the preceding claims, wherein the permanent magnets (4) are elongated, extend between the ends of the stator cavity (11), and are grouped in at least two groups (9, 10), each constituting a pole, and wherein the permanent magnets within each group are arranged adjacent to each other.

12. The direct current motor according to claim 11, wherein each group (9, 10) contain magnets (4) of different grades, where at least one magnet at the middle of the group has the highest grade.

13. The direct current motor according to any one of the preceding claims, wherein the permanent magnets (4) are chosen from a group of magnets comprising Neodymium-Iron-Boron, Samarium-Cobalt, and Aluminum-Nickel-Cobalt magnets.

14. The direct current motor according to any one of the preceding claims, wherein an on-rotor drive system comprising the rectifier device (24), the DC supply device (25), and the electronic commutator (26), has an architecture which supports bi-directional power flow.

15. The direct current motor according to any one of the preceding claims, wherein the magnets (4) are arranged at an inner surface of the yoke (5).
